# EUROPÄISCHE PATENTANMELDUNG

(11) **EP 2 455 284 A2**
(43) Veröffentlichungstag der Anmeldung: **23.05.2012**
(21) Anmeldenummer: 11009072.7
(22) Anmeldetag: 15.11.2011
(51) Int. Cl.: B64D 13/00

(54) **Belüftungssystem und Flugzeugklimaanlage**

(30) Priorität: 22.11.2010 DE 102010052157; 22.11.2010 US 415996 P
(71) Anmelder: Airbus Operations GmbH, 21129 Hamburg (DE)
(72) Erfinder: Grosse-Plankermann, Peter, Dipl.-Ing., 21629 Neu Wulmstorf (DE); Pätz, Martin, Dipl.-Ing., 22609 Hamburg (DE); Fink, Thomas, Dipl.-Ing., 21129 Hamburg (DE)
(74) Vertreter: Schicker, Silvia

(57) **Zusammenfassung**

Ein Belüftungssystem (10) zur Montage in einer Flugzeugpassagierkabine umfasst ein Luftzufuhrrohr (12), das eine Mehrzahl von entlang seiner Längsachse (L) verteilt angeordneten Luftauslassöffnungen (14) aufweist. Ein Luftkammergehäuse (16) ist entlang der Längsachse (L) des Luftzufuhrrohrs an verschiedenen Positionen mit dem Luftzufuhrohr (12) verbindbar, so dass das Luftzufuhrrohr (12) durchströmende Klimatisationsluft durch eine in dem Luftzufuhrrohr (12) vorgesehene Luftauslassöffnung in das Luftkammergehäuse (16) zuführbar ist. Eine Verbindungseinrichtung (34) ist dazu eingerichtet, das Luftkammergehäuse (16) mit einer Luftzufuhrvorrichtung (36) zur Zufuhr von Klimatisationsluft in die Flugzeugpassagierkabine zu verbinden.

## Beschreibung

Die Erfindung betrifft ein zur Montage in einer Flugzeugpassagierkabine vorgesehenes Belüftungssystem, insbesondere ein Individualbelüftungssystem sowie eine mit einem derartigen Belüftungssystem ausgestattete Flugzeugklimaanlage.

Moderne Verkehrsflugzeuge sind üblicherweise mit einem Individualbelüftungssystem ausgerüstet, das die Passagiere in der Passagierkabine des Flugzeugs individuell mit von einer Flugzeugklimaanlage bereitgestellter Klimatisationsluft versorgt. Ein gängiges Individualbelüftungssystem umfasst ein Individualluftzufuhrrohr, das sich in der Flugzeugpassagierkabine in einem Bereich unterhalb von zur Aufnahme von Handgepäckstücken der Passagiere dienenden Gepäckfächern oder im Bereich einer Seitenwand der Passagierkabine im Wesentlichen parallel zu einer Längsachse der Flugzeugpassagierkabine erstreckt. Das Individualluftzufuhrrohr wird von Klimatisationsluft durchströmt, die dem Individualluftzufuhrrohr von einer Klimatisationslufterzeugungseinrichtung der Flugzeugklimaanlage zugeführt wird.

Aus der EP 0 607 602 A1 ist eine Anordnung bekannt, die eine Luftleitung sowie eine Passagierversorgungseinheit umfasst. Die Luftleitung besteht aus einem geradlinigen formsteifen Hohlprofil mit einem Längsschlitz, wobei der Längsschlitz durch eine Dichtlippe abgedichtet ist. Zur Entnahme der Luft ist ein in Längsrichtung der Luftleitung geführter Schlitten mit einem in einen Innenraum des Hohlprofils hineinragenden Entnahmestutzen vorgesehen. Der Schlitten weist eine Außenführung sowie eine Innenführung auf, die mit dem Entnahmestutzen fest verbunden und so in einem Abstand voneinander angeordnet sind, dass sie einen an die Dichtlippe angepassten Zwischenraum bilden.

Die DE 10 2010 018 502 betrifft ein Versorgungssystem zur Versorgung von Passagieren an Bord eines Flugzeugs, das eine Versorgungsleitung sowie eine Mehrzahl von Versorgungsmodulen umfasst, die zur Versorgung der Passagiere mit einer Versorgungsöffnung der Versorgungsleitung verbindbar sind. Die Versorgungsmodule sind entlang der Versorgungsleitung relativ zueinander verschiebbar. Jedem Versorgungsmodul ist eine Blende zugeordnet, die entlang der Versorgungsleitung verschiebbar ist, um eine nicht zur Verbindung eines Versorgungsmoduls mit der Versorgungsleitung genutzte Versorgungsöffnung abzudecken.

Die Erfindung ist auf die Aufgabe gerichtet, ein einfach montier- und, bei Bedarf, einfach rekonfigurierbares Belüftungssystem für eine Flugzeugpassagierkabine bereitzustellen. Ferner ist die Erfindung auf die Aufgabe gerichtet, eine mit einem derartigen Belüftungssystem ausgestattete Flugzeugklimaanlage anzugeben.

Diese Aufgabe wird durch ein Belüftungssystem mit den Merkmalen des Anspruchs 1 sowie eine Flugzeugklimaanlage mit den Merkmalen des Anspruchs 15 gelöst.

Ein erfindungsgemäßes, zur Montage in einer Flugzeugpassagierkabine vorgesehenes Belüftungssystem umfasst ein Luftzufuhrrohr, das eine Mehrzahl von entlang seiner Längsachse verteilt angeordneten Luftauslassöffnungen aufweist. Das Luftzufuhrrohr ist vorzugsweise in Form eines starren Rohrs ausgeführt und kann beispielsweise aus einem extrudierten Kunststoffmaterial bestehen. Der Querschnitt des Luftzufuhrrohrs kann, je nach Bedarf, an die Einbauraumgegebenheiten in der Flugzeugpassagierkabine angepasst werden und beispielsweise rechteckig, rund oder oval sein. Vorzugsweise sind die Luftauslassöffnungen des Luftzufuhrrohrs hintereinander im Wesentlichen in einer Linie entlang der Längsachse des Luftzufuhrrohrs verteilt angeordnet. Falls erforderlich, ist jedoch auch eine versetzte Anordnung der Luftauslassöffnungen denkbar. Das Luftzufuhrrohr ist vorzugsweise mit einer Klimatisationslufterzeugungseinrichtung einer Flugzeugklimaanlage verbunden, so dass das Luftzufuhrrohr im Betrieb des erfindungsgemäßen Belüftungssystems von Klimatisationsluft durchströmt wird, die dem Luftzufuhrrohr von der Klimatisationslufterzeugungseinrichtung der Flugzeugklimaanlage zugeführt wird.

Das erfindungsgemäße Belüftungssystem umfasst ferner ein Luftkammergehäuse, das entlang der Längsachse des Luftzufuhrrohrs an verschiedenen Positionen mit dem Luftzufuhrrohr verbindbar ist. Die Verbindung des Luftkammergehäuses mit dem Luftzufuhrrohr erfolgt derart, dass das Luftzufuhrrohr durchströmende Klimatisationsluft durch eine in dem Luftzufuhrrohr vorgesehene Luftauslassöffnung in das Luftkammergehäuse zuführbar ist. Das Luftkammergehäuse wird vorzugsweise derart an dem Luftzufuhrrohr befestigt, dass das Luftkammergehäuse mindestens eine Luftauslassöffnung des Luftzufuhrrohrs überdeckt. Grundsätzlich kann das Luftkammergehäuse eine beliebige Form haben. Vorzugsweise hat das Luftkammergehäuse jedoch eine langgestreckte Form, so dass das Luftkammergehäuse über eine längere Strecke entlang der Längsachse des Luftzufuhrrohrs versetzt werden kann, die in dem Luftzufuhrrohr ausgebildete Luftauslassöffnung aber immer noch überdeckt. Um das Gewicht des erfindungsgemäßen Belüftungssystems nicht unnötig zu erhöhen, ist die Längserstreckung des Luftkammergehäuses vorzugsweise jedoch geringer als der Abstand zwischen zwei zueinander benachbarten Luftauslassöffnungen des Luftzufuhrrohrs.

Schließlich umfasst das erfindungsgemäße Belüftungssystem eine Verbindungseinrichtung, die dazu eingerichtet ist, das Luftkammergehäuse mit einer Luftzufuhrvorrichtung zur Zufuhr von Klimatisationsluft in die Flugzeugpassagierkabine zu verbinden. Die Luftzufuhrvorrichtung zur Zufuhr von Klimatisationsluft in die Flugzeugpassagierkabine kann beispielsweise eine individuell bedienbare Luftdusche eines Individualbelüftungssystems sein. Alternativ dazu kann es sich bei der Luftzufuhrvorrichtung jedoch auch um eine Luftzufuhrvorrichtung eines zentral gesteuerten Teilsystems des Kabinenbelüftungssystems handeln.

Das erfindungsgemäße Belüftungssystem ermöglicht eine einfache und flexible Verbindung von an verschiedenen Positionen in der Flugzeugpassagierkabine angeordneten Luftzufuhrvorrichtungen zur Zufuhr von Klimatisationsluft in Flugzeugpassagierkabinen an das Luftzufuhrrohr durch entsprechendes Positionieren des Luftkammergehäuses entlang der Längsachse des Luftzufuhrrohrs. Auf die Bereitstellung unterschiedlich langer flexibler Schläuche, wie sie beispielsweise in herkömmlichen Individualbelüftungssystemen eingesetzt werden, kann daher bei dem erfindungsgemäßen Belüftungssystem verzichtet werden. Die Bereitstellung entsprechender Aufnahmen für die Schläuche ist ebenfalls nicht länger erforderlich. Schließlich erlaubt die flexible Positionierung des Luftkammergehäuses entlang der Längsachse des Luftzufuhrrohrs den Verzicht auf die Bereitstellung von Doppelluftauslässen an dem Luftzufuhrrohr und Doppellufteinlässen an der Zufuhrvorrichtung zur Zufuhr von Klimatisationsluft in die Flugzeugpassagierkabine. Das erfindungsgemäße Belüftungssystem zeichnet sich somit durch ein geringes Gewicht sowie eine einfache Montierbarkeit aus. Ferner ist das Belüftungssystem im Rahmen einer Rekonfigurierung der Flugzeugpassagierkabine mit geringem Aufwand rekonfigurierbar. Der Vorteil der einfachen Rekonfigurierbarkeit des Belüftungssystems kommt besonders zum Tragen, wenn das erfindungsgemäße Belüftungssystem als Individualbelüftungssystem ausgeführt ist. Grundsätzlich kann das erfindungsgemäße Belüftungssystem jedoch auch in Form eines zentral gesteuerten Teilsystems des Passagierkabinenbelüftungssystems des Flugzeugs ausgeführt sein.

Das Luftkammergehäuse umfasst vorzugsweise einen von einem Seitenwandbereich des Luftkammergehäuses begrenzten offenen Anschlussbereich, der dazu eingerichtet ist, die Zufuhr von aus einer Luftauslassöffnung des Luftzufuhrrohrs austretender Klimatisationsluft in das Luftkammergehäuse zu ermöglichen. Beispielsweise kann das Luftkammergehäuse einen in seinem Anschlussbereich offenen halbrunden oder halbovalen Querschnitt aufweisen. Es versteht sich, dass das Luftkammergehäuse jedoch auch einen eckigen Querschnitt haben kann. Wenn das Luftkammergehäuse mit dem Luftzufuhrrohr verbunden ist, grenzt das Luftkammergehäuse im Bereich seines offenen Anschlussbereichs an eine Außenfläche des Luftzufuhrrohrs, so dass aus einer Luftauslassöffnung des Luftzufuhrrohrs austretende Klimatisationssluft durch den offenen Anschlussbereich des Luftkammergehäuses in das Luftkammergehäuse einströmen kann.

Vorzugsweise umfasst das Luftkammergehäuse ein Dichtelement, das sich entlang eines dem Luftzufuhrrohr zugewandten Rands des Seitenwandbereichs des Luftkammergehäuses erstreckt. Insbesondere handelt es sich bei dem Dichtelement um ein umlaufendes Dichtelement, das entlang des gesamten dem Luftzufuhrrohr zugewandten Rands des Seitenwandbereichs des Luftkammergehäuses eine Abdichtung des Luftkammergehäuses gegenüber der Umgebung ermöglicht. Im mit dem Luftzufuhrrohr verbundenen Zustand wirkt das Dichtelement vorzugsweise mit einer Außenfläche des Luftzufuhrrohrs zusammen.

In einer bevorzugten Ausführungsform des erfindungsgemäßen Belüftungssystems umfasst das Luftzufuhrrohr eine sich entlang seiner Längsachse erstreckende Führungseinrichtung, die dazu eingerichtet ist, eine geführte Verschiebung des Luftkammergehäuses entlang der Längsachse des Luftzufuhrrohrs zu ermöglichen. Eine an dem Luftzufuhrrohr vorgesehene Führungseinrichtung ermöglicht eine besonders einfache Montage und/oder Rekonfiguration des erfindungsgemäßen Belüftungssystems. Die Führungseinrichtung kann beispielsweise zwei sich entlang der Längsachse des Luftzufuhrrohrs und im Wesentlichen parallel zueinander erstreckende Führungsschienen umfassen. Die Führungsschienen können von einer Außenfläche des Luftzufuhrrohrs in Richtung des Luftkammergehäuses ragen und mit Außenflächen zweier einander gegenüberliegender Seitenwandbereichsabschnitte des Luftkammergehäuses zusammenwirken, um eine geführte Verschiebung des Luftkammergehäuses entlang der Längsachse des Luftzufuhrrohrs zu ermöglichen.

Vorzugsweise umfasst das erfindungsgemäße Belüftungssystem ferner eine Verriegelungsvorrichtung zur Verriegelung des Luftkammergehäuses in einer gewünschten Position entlang der Längsachse des Luftzufuhrrohrs. Die Verriegelungsvorrichtung sorgt dafür, das Luftkammergehäuse sicher in einer gewünschten Position entlang der Längsachse des Luftzufuhrrohrs zu fixieren.

Vorzugsweise umfasst die Verriegelungsvorrichtung ein Verriegelungselement, das zwischen einer Entriegelungsstellung und einer Verriegelungsstellung bewegbar mit dem Luftkammergehäuse verbunden ist und in seiner Verriegelungsstellung mit einer an dem Luftzufuhrrohr vorgesehenen Aufnahmevorrichtung in Eingriff bringbar ist. Zur Positionierung des Luftkammergehäuses relativ zu dem Luftzufuhrrohr kann das Verriegelungselement dann in seiner Entriegelungsstellung gebracht werden, wodurch eine ungehinderte Bewegung des Luftkammergehäuses entlang der Längsachse des Luftzufuhrrohrs, aber auch ein vollständiges Lösen des Luftkammergehäuses von dem Luftzufuhrrohr möglich ist. Wenn das Luftkammergehäuse in der gewünschten Position entlang der Längsachse des Luftzufuhrrohrs angeordnet ist, kann das Verriegelungselement in seine Verriegelungsstellung bewegt werden, um das Luftkammergehäuse an dem Luftzufuhrrohr zu fixieren.

Die an dem Lufzufuhrrohr vorgesehene Aufnahmevorrichtung umfasst vorzugsweise mindestens eine Aufnahmenut. Die Aufnahmenut kann an der sich entlang der Längsachse des Luftzufuhrrohrs erstreckenden Führungseinrichtung ausgebildet sein. Bei einer besonders bevorzugten Ausführungsform des erfindungsgemäßen Belüftungssystems sind zwei sich entlang der Längsachse des Luftzufuhrrohrs und im Wesentlichen parallel zueinander erstreckende Führungsschienen der Führungseinrichtung jeweils mit einer Aufnahmenut versehen. Das Verriegelungselement kann dann in Form eines drehbar mit dem Luftkammergehäuse verbundenen Verriegelungselement ausgeführt sein. In der Entriegelungsstellung des Verriegelungselements befindet sich das Verriegelungselement außer Eingriff mit den Aufnahmenuten der Aufnahmevorrichtung. Wenn sich das Verriegelungselement dagegen in seiner Verriegelungsstellung befindet, greifen Randabschnitte des Verriegelungselements in die Aufnahmenuten der Aufnahmevorrichtung ein.

Vorzugsweise ist das Verriegelungselement der Verriegelungsvorrichtung dazu eingerichtet, in seiner Verriegelungsstellung eine Kraft auf das Luftkammergehäuse aufzubringen, die das Luftkammergehäuse gegen das Luftzufuhrrohr drückt. Das Verriegelungselement erfüllt dann nicht nur die Funktion, das Luftkammergehäuse in einer gewünschten Position an dem Luftzufuhrrohr zu fixieren, sondern drückt auch das Dichtelement des Luftkammergehäuses gegen die Außenfläche des Luftzufuhrrohrs und trägt somit dazu bei, dass das Luftkammergehäuse abdichtend mit dem Luftzufuhrrohr verbunden wird.

Das Verriegelungselement ist vorzugsweise in Form einer Verriegelungsklammer ausgebildet, die das Luftkammergehäuse in ihrer Verriegelungsstellung zumindest abschnittsweise umspannt. Ein derart ausgeführtes Verriegelungselement ist einfach konstruiert, erlaubt aber dennoch nicht nur eine sichere Fixierung des Luftkammergehäuses an dem Luftzufuhrrohr, sondern ermöglicht es auch, eine das Luftkammergehäuse gegen das Luftzufuhrrohr drückende Kraft auf das Luftkammergehäuse aufzubringen.

Nicht mit einem Luftkammergehäuse verbundene, bzw. nicht von einem Luftkammergehäuse überdeckte Luftauslassöffnungen des Luftzufuhrrohrs sind bei dem erfindungsgemäßen Belüftungssystem vorzugsweise mittels entsprechender Verschlussvorrichtungen abdichtend verschlossen. Dadurch wird verhindert, dass das Luftzufuhrrohr durchströmende Klimatisationsluft in unerwünschter Weise aus dem Luftzufuhrrohr austritt. Die Verschlussvorrichtungen können beispielsweise in Form von Schraubverschlüssen, Stopfen oder dergleichen ausgeführt sein.

Die Verbindungseinrichtung des erfindungsgemäßen Belüftungssystems weist vorzugsweise eine Mehrzahl von Verbindungsöffnungen zur Verbindung des Luftkammergehäuses mit einer Luftzufuhrvorrichtung zur Zufuhr von Klimasitationsluft in die Flugzeugpassagierkabine auf. Durch die Ausgestaltung der Verbindungseinrichtung mit mehreren Verbindungsöffnungen wird die Flexibilität des Belüftungssystems weiter erhöht.

Beispielsweise kann eine erste Verbindungsöffnung der Verbindungseinrichtung so angeordnet sein, dass sie im Wesentlichen senkrecht zur Längsachse des Luftzufuhrrohrs von Klimasitationsluft durchströmbar ist. Eine zweite Verbindungsöffnung der Verbindungseinrichtung kann dagegen so angeordnet sein, dass sie im Wesentlichen parallel zur Längsachse des Luftzufuhrrohrs von Klimatisationsluft durchströmbar ist.

Eine nicht mit einer Luftzufuhrvorrichtung zur Zufuhr von Klimatisationsluft in die Flugzeugpassagierkabine verbundene Verbindungsöffnung der Verbindungseinrichtung ist vorzugsweise mittels einer entsprechenden Verschlussvorrichtung abdichtend verschlossen. Dadurch wird verhindert, dass in unerwünschter Weise Klimatisationsluft aus dem Luftkammergehäuse austritt. Als Verschlussvorrichtung kann ein Schraubverschluss oder ein Stopfen verwendet werden.

Grundsätzlich ist es möglich, alle Verbindungsöffnungen der Verbindungseinrichtung mit einer Zufuhrvorrichtung oder mehreren Zufuhrvorrichtung zur Zufuhr von Klimatisationsluft in die Flugzeugpassagierkabine zu verbinden. Vorzugsweise wird jedoch lediglich eine Verbindungsöffnung der Verbindungseinrichtung mit einer Luftzufuhrvorrichtung zur Zufuhr von Klimatisationsluft in die Flugzeugpassagierkabine verbunden. In Abhängigkeit der Position der Luftzufuhrvorrichtung relativ zu dem Luftkammergehäuse kann die günstiger angeordnete Verbindungsöffnung der Verbindungseinrichtung zur Verbindung des Luftkammergehäuses mit der Luftzufuhrvorrichtung verwendet werden. Beispielsweise kann eine im Wesentlichen senkrecht zur Längsachse des Luftzufuhrrohrs von Klimatisationsluft durchströmbare erste Verbindungsöffnung der Verbindungseinrichtung unmittelbar mit der Luftzufuhrvorrichtung verbunden, eine im Wesentlichen parallel zur Längsachse des Luftzufuhrrohrs von Klimatisationsluft durchströmbare zweite Verbindungsöffnung der Verbindungseinrichtung dagegen mittels einer entsprechenden Verschlussvorrichtung abgedichtet werden. Eine derartige Konfiguration des erfindungsgemäßen Belüftungssystems ist insbesondere dann sinnvoll, wenn die Luftzufuhrvorrichtung so positioniert ist und das Luftkammergehäuse derart relativ zu dem Luftzufuhrrohr angeordnet werden kann, dass eine unmittelbare Verbindung der Verbindungseinrichtung mit der Luftzufuhrvorrichtung möglich ist.

Falls erforderlich, kann die Verbindungseinrichtung jedoch auch einen Verlängerungsadapter umfassen, der eine Verbindungsöffnung der Verbindungseinrichtung mit einer Luftzufuhrvorrichtung zur Zufuhr von Klimatisationsluft in die Flugzeugpassagierkabine verbindet. Vorzugsweise ist ein derartiger Verlängerungsadapter mit der zweiten Verbindungsöffnung der Verbindungseinrichtung verbunden, die im Wesentlichen parallel zur Längsachse des Luftzufuhrrohrs von Klimatisationsluft durchströmbar ist.

Eine erfindungsgemäße Flugzeugklimaanlage umfasst ein oben beschriebenes Belüftungssystem.

Eine bevorzugte Ausführungsform der Erfindung wird nun anhand der beigefügten schematischen Zeichnungen näher erläutert, von denen
- Figur 1: eine Querschnittsdarstellung eines in Form eines Individualbelüftungssystems ausgebildeten Flugzeugpassagierkabinenbelüftungssystems zeigt,
- Figuren 2a bis 2c: verschiedene Ansichten eines Luftkammergehäuses des Belüftungssystems zeigen,
- Figuren 3a bis 3b: verschiedene Ansichten eines mit einem Verlängerungsadapter ausgestatteten Luftkammergehäuses des Belüftungssystems zeigen,
- Figur 4: zwei jeweils mit einer Zufuhrvorrichtung zur Zufuhr von Klimatisationsluft in eine Flugzeugpassagierkabine verbundene Luftkammergehäuse gemäß den Figuren 2a bis 2c zeigt,
- Figur 5: zwei jeweils mit einer Luftzufuhrvorrichtung zur Zufuhr von Klimatisationsluft in eine Flugzeugpassagierkabine verbundene Luftkammergehäuse gemäß den Figuren 3a bis 3b zeigt, und
- Figuren 6a bis 6g: Seitenansichten eines Luftzufuhrrohrs (Figur 6a) sowie eines Luftzufuhrrohrs, mit dem ein Luftkammergehäuse verbunden ist, (Figuren 6b bis 6g) zeigen.

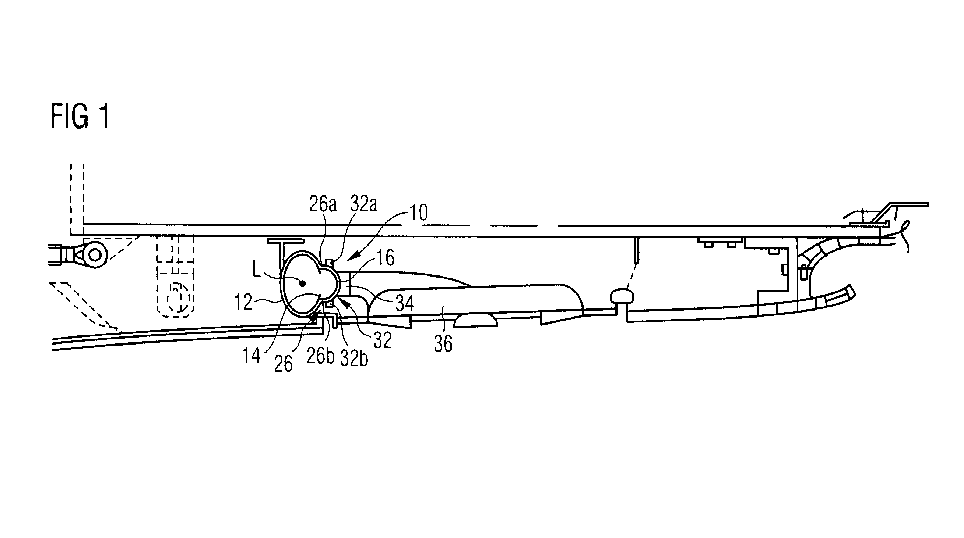

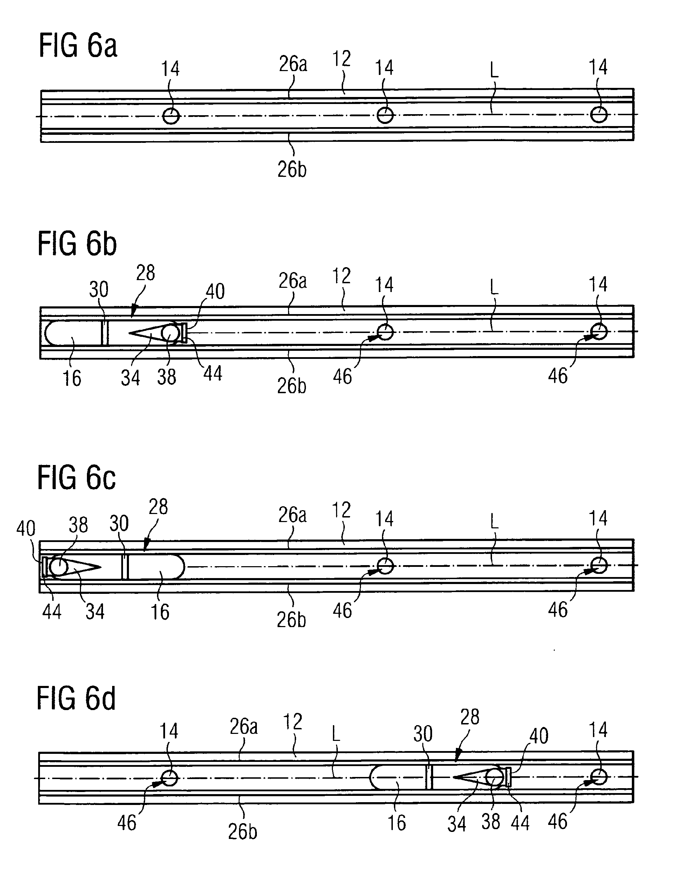

Ein in den Figuren veranschaulichtes Belüftungssystem 10 zur Zufuhr von Klimatisationsluft in eine Flugzeugpassagierkabine ist als Individualbelüftungssystem ausgeführt, das dazu dient, die Passagiere in der Passagierkabine des Flugzeugs individuell mit von einer Flugzeugklimaanlage bereitgestellter Klimatisationsluft zu versorgen. Das Belüftungssystem 10 umfasst ein Luftzufuhrrohr 12, das mit einer nicht veranschaulichten Klimatisationslufterzeugungseinrichtung der Flugzeugklimaanlage verbunden ist. Im Betrieb des Belüftungssystems 10 wird das Luftzufuhrrohr 12 von Klimatisationsluft durchströmt, die dem Luftzufuhrrohr 12 von der Klimatisationslufterzeugungseinrichtung der Flugzeugklimaanlage zugeführt wird. Wie in Figur 1 zu erkennen ist, weist das Luftzufuhrrohr 12 in dem in den Figuren veranschaulichten Ausführungsbeispiel einen ovalen Querschnitt auf. Die Figuren 6a bis 6g veranschaulichen, dass das Luftzufuhrrohr 12 mit einer Mehrzahl von Luftauslassöffnungen 14 versehen ist, die entlang einer Längsachse L des Luftzufuhrrohrs verteilt angeordnet sind. In dem gezeigten Ausführungsbeispiel eines Belüftungssystems 10 sind die Luftauslassöffnungen 14 in gleichbleibenden Abständen voneinander im Wesentlichen in einer Linie positioniert. Bei Bedarf kann das Luftzufuhrrohr 12 jedoch auch mit versetzt zueinander angeordneten und/oder in unterschiedlichen Abständen voneinander positionierten Luftauslassöffnungen 14 versehen sein.

Das Belüftungssystem 10 umfasst ferner ein Luftkammergehäuse 16. Wie am Besten in den Figuren 6b bis 6g zu erkennen ist, ist das Luftkammergehäuse 16 entlang der Längsachse L des Luftzufuhrrohrs 12 an verschiedenen Positionen mit dem Luftzufuhrrohr verbindbar. In seinem mit dem Luftzufuhrrohr 12 verbundenen Zustand überdeckt das Luftkammergehäuse 16 eine in dem Luftzufuhrrohr 12 ausgebildete Luftauslassöffnung 14, so dass das Luftzufuhrrohr 12 durchströmende Klimatisationsluft durch die in dem Luftzufuhrrohr 12 vorgesehene und von dem Luftkammergehäuse 16 überdeckte Luftauslassöffnung 14 in das Luftkammergehäuse 16 zuführbar ist.

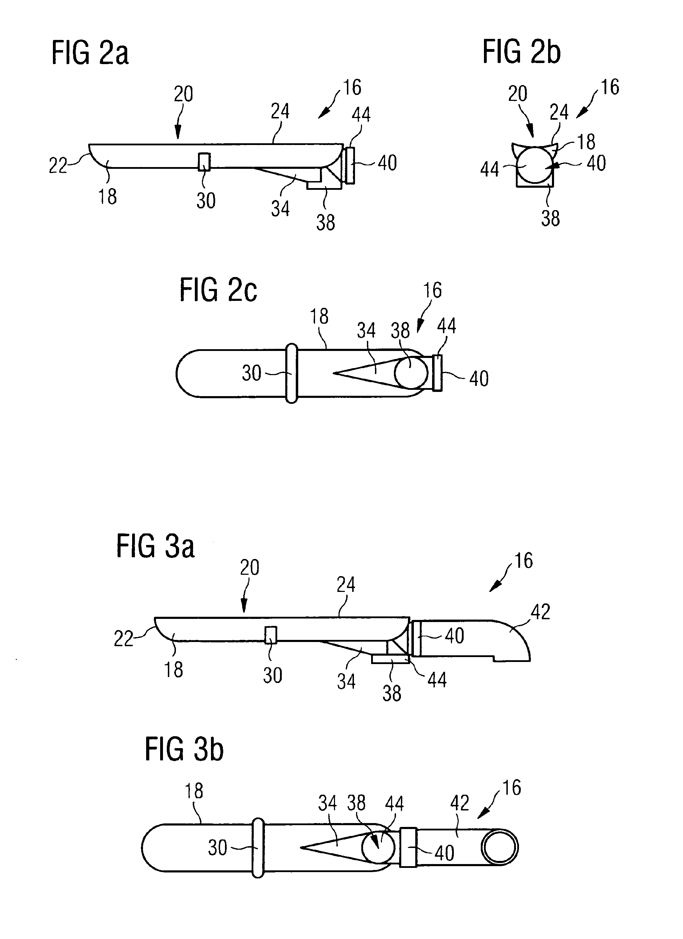

Wie am Besten in den Figuren 2a bis 2c und 3a bis 3b zu erkennen ist, umfasst das Luftkammergehäuse 16 einen Seitenwandbereich 18, der einen offenen Anschlussbereich 20 des Luftkammergehäuses 16 begrenzt. Im mit dem Luftzufuhrrohr 12 verbundenen Zustand des Luftkammergehäuses 16 kann durch den offenen Anschlussbereich 20 aus der von dem Luftkammergehäuse 16 überdeckten Luftauslassöffnung 14 des Luftzufuhrrohrs 12 austretende Klimatisationsluft in das Luftkammergehäuse 16 zugeführt werden. Entlang eines Rands 22 seines Seitenwandbereichs 18 ist das Luftkammergehäuse 16 mit einem umlaufenden Dichtelement 24 versehen. Im mit dem Luftzufuhrrohr 12 verbundenen Zustand des Luftkammergehäuses 16 liegt das Dichtelement 24 an einer Außenfläche des Luftzufuhrrohrs 12 an und sorgt somit für eine Abdichtung des Luftkammergehäuses 16 gegenüber der Umgebung. Das Luftkammergehäuse 16 weist eine langgestreckte Form auf. Die Längserstreckung des Luftkammergehäuses 16 ist jedoch geringer als der Abstand zwischen zwei zueinander benachbarten Luftauslassöffnungen 14 des Luftzufuhrrohrs 12.

Das Luftzufuhrrohr 12 ist mit einer Führungseinrichtung 26 versehen, die dazu eingerichtet ist, eine geführte Verschiebung des Luftkammergehäuses 16 entlang der Längsachse L des Luftzufuhrrohrs 12 zu ermöglichen. Die Führungseinrichtung 26 umfasst zwei sich entlang der Längsachse L des Luftzufuhrrohrs 12 und im Wesentlichen parallel zueinander erstreckende Führungsschienen 26a, 26b, die mit zwei einander gegenüberliegenden Außenflächenabschnitten des Seitenwandbereichs 18 des Luftkammergehäuses 16 zusammenwirken. Die Führungseinrichtung 26 ermöglicht eine geführte Verschiebung des Luftkammergehäuses 16 entlang der Längsachse L des Luftzufuhrrohrs 12.

Zur Fixierung des Luftkammergehäuses 16 in einer gewünschten Position an dem Luftzufuhrrohr 12 ist eine Verriegelungsvorrichtung 28 vorhanden. Die Verriegelungsvorrichtung 28 umfasst ein in Form einer Verriegelungsklammer ausgebildetes Verriegelungselement 30, das zwischen einer Entriegelungsstellung und einer Verriegelungsstellung drehbar mit dem Luftkammergehäuse 16 verbunden ist. In seiner in den Figuren veranschaulichten Verriegelungsstellung befindet sich das Verriegelungselement 30 in Eingriff mit einer an dem Luftzufuhrrohr 12 vorgesehenen Aufnahmevorrichtung 32. Die Aufnahmevorrichtung 32 umfasst zwei einander gegenüberliegende Aufnahmennuten 32a, 32b, die an den Führungsschienen 26a, 26b ausgebildet sind (siehe Figur 1). Wenn sich das Verriegelungselement 30 in seiner Verriegelungsstellung befindet, greifen Randabschnitte des Verriegelungselements 30 in die Aufnahmenuten 32a, 32b ein, wodurch das Luftkammergehäuse 16 in seiner Position relativ zu dem Luftzufuhrrohr 12 fixiert wird. Ferner bringt das in Form einer das Luftkammergehäuse 16 abschnittsweise überspannenden Verriegelungsklammer ausgebildete Verriegelungselemente 30 in seiner Verriegelungsstellung eine Kraft auf das Luftkammergehäuse 16 auf, die das Luftkammergehäuse 16 gegen das Luftzufuhrrohr 12 drückt. Dadurch wird die Dichtwirkung des Dichtelements 24 verbessert.

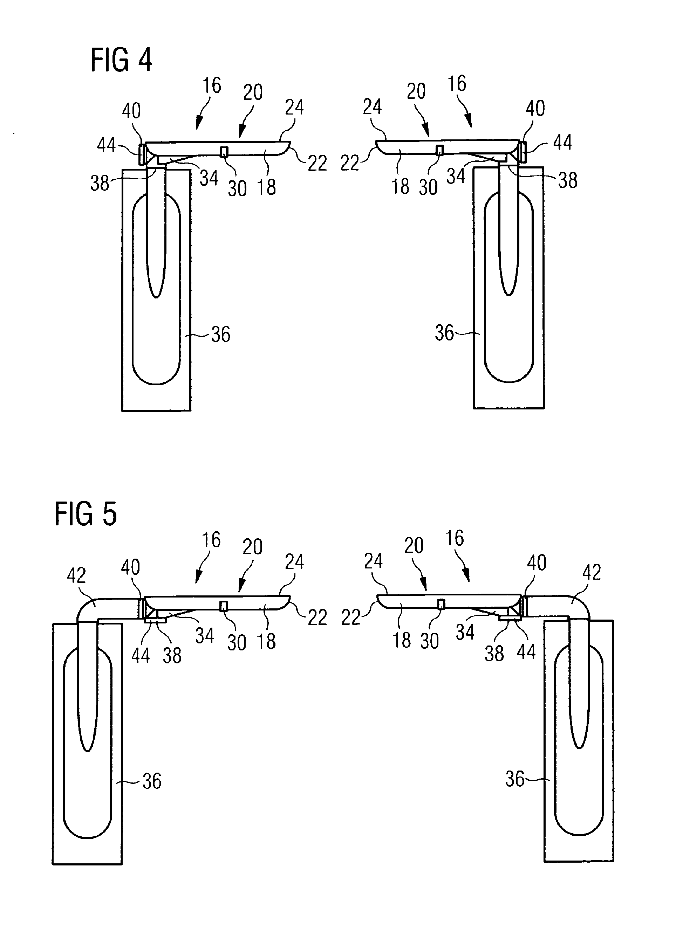

Schließlich umfasst das Belüftungssystem 10 eine Verbindungseinrichtung 34, die dazu dient, das Luftkammergehäuse 16 mit einer in den Figuren 4 und 5 gezeigten Luftzufuhrvorrichtung 36 zur Zufuhr von Klimatisationsluft in die Flugzeugpassagierkabine zu verbinden. In dem hier gezeigten Ausführungsbeispiel eines Belüftungssystems 10 ist die Luftzufuhrvorrichtung 36 in Form einer individuell bedienbaren Luftdusche ausgeführt. Wie am Besten in den Figuren 2a bis 2c zu erkennen ist, umfasst die Verbindungseinrichtung 34 eine erste Verbindungsöffnung 38, die so positioniert ist, dass sie im Wesentlichen senkrecht zur Längsachse L des Luftzufuhrrohrs 12 von Klimatisationsluft durchströmbar ist. Eine zweite Verbindungsöffnung 40 der Verbindungseinrichtung 34 ist dagegen so angeordnet, dass sie im Wesentlichen parallel zur Längsachse L des Luftzufuhrrohrs 12 von Klimatisationsluft durchströmbar ist. Die erste Verbindungsöffnung 38 dient dazu, das Luftkammergehäuse, wie in Figur 4 gezeigt, unmittelbar mit einer Luftzufuhrvorrichtung 36 zur Zufuhr von Klimatisationsluft in die Flugzeugpassagierkabine zu verbinden. Die zweite Verbindungsöffnung 40 kann dagegen, wie in Figur 5 gezeigt, dazu genutzt werden, einen Verlängerungsadapter 42 zwischen das Luftkammergehäuse 16 und die Luftzufuhrvorrichtung 36 zu schalten. Die nicht mit der Luftzufuhrvorrichtung 36 verbundene Verbindungseinrichtung 38, 40 ist jeweils mit einer Verschlussvorrichtung 44, die beispielsweise in Form eines Schraubverschlusses ausgeführt sein kann, abdichtend verschlossen.

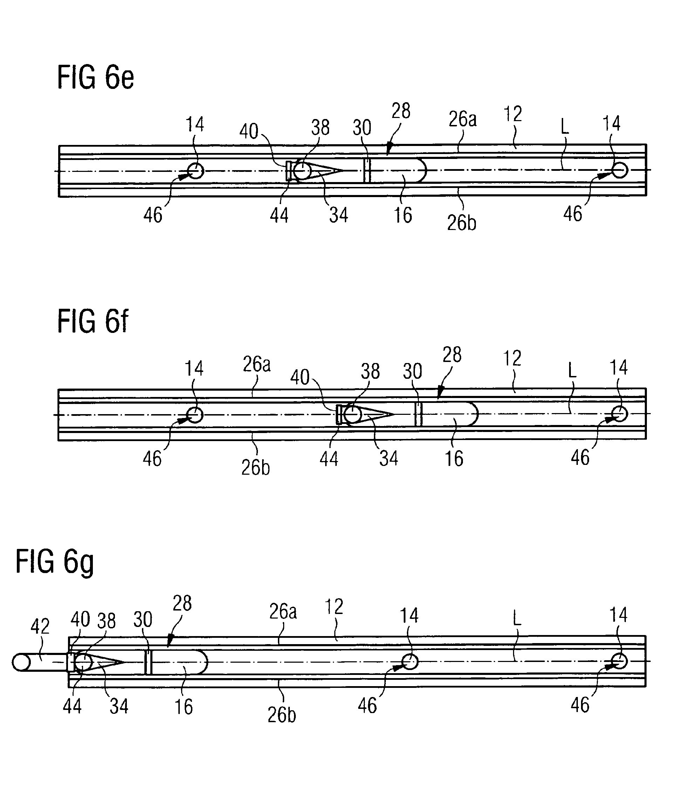

Die Figuren 6b bis 6f veranschaulichen verschiedene Möglichkeiten, das Luftkammergehäuse 16 relativ zu dem Luftzufuhrrohr 12 zu positionieren. Beispielsweise kann das Luftkammergehäuse 16, wie in den Figuren 6b und 6c veranschaulicht, um 180° relativ zu dem Luftzufuhrrohr 12 gedreht werden, um die Position der ersten Verbindungsöffnung 38 der Verbindungseinrichtung 34 an die Position einer zur Verbindung mit dem Luftkammergehäuse 16 vorgesehenen Luftzufuhrvorrichtung 36 anzupassen. Ferner ist eine Verschiebung des Luftkammergehäuses 16 parallel zur Längsachse L des Luftzufuhrrohrs 12 möglich, wodurch das Luftkammergehäuse 16, wie in den Figuren 6d und 6e gezeigt, mit einer benachbarten Luftauslassöffnung 14 des Luftzufuhrrohrs in Verbindung gebracht werden kann. Alternativ dazu kann das Luftkammergehäuse 16 jedoch auch lediglich soweit parallel zur Längsachse L des Luftzufuhrrohrs verschoben werden, dass es noch dieselbe Luftauslassöffnung 14 des Luftzufuhrrohrs überdeckt, aber dennoch eine gewisse Anpassung an die Position einer mit dem Luftkammergehäuse 16 zu verbindenden Luftzufuhrvorrichtung 16 erlaubt (siehe Figuren 6e und 6f). Schließlich kann das Luftkammergehäuse 16, wie in Figur 6g veranschaulicht, zusätzlich mit einem Verlängerungsadapter 42 versehen werden, der die zweite Verbindungsöffnung 40 der Verbindungseinrichtung 34 mit der Luftzufuhrvorrichtung 16 verbindet.

Um einen unerwünschten Austritt von Klimatisationsluft aus dem Luftzufuhrrohr 12 zu verhindern, sind bei dem Belüftungssystem 10 nicht von dem Luftkammergehäuse 16 überdeckte Luftauslassöffnungen 14 des Luftzufuhrrohrs 12 mit entsprechenden, beispielsweise in Form von Schraubverschlüssen ausgeführten Verschlussvorrichtungen 46 abdichtend verschlossen.

## Patentansprüche

1. Belüftungssystem (10) zur Montage in einer Flugzeugpassagierkabine, welches umfasst:
- ein Luftzufuhrrohr (12), das eine Mehrzahl von entlang seiner Längsache (L) verteilt angeordneten Luftauslassöffnungen (14) aufweist,
- ein Luftkammergehäuse (16), das entlang der Längsache (L) des Luftzufuhrrohrs (12) an verschiedenen Positionen mit dem Luftzufuhrrohr (12) verbindbar ist, so dass das Luftzufuhrrohr (12) durchströmende Klimatisationsluft durch eine in dem Luftzufuhrrohr (12) vorgesehene Luftauslassöffnung (14) in das Luftkammergehäuse (16) zuführbar ist, und
- eine Verbindungseinrichtung (34), die dazu eingerichtet ist, das Luftkammergehäuse (16) mit einer Luftzufuhrvorrichtung (36) zur Zufuhr von Klimatisationsluft in die Flugzeugpassagierkabine zu verbinden.

2. Belüftungssystem nach Anspruch 1,
**dadurch gekennzeichnet, dass** das Luftkammergehäuse (16) einen von einem Seitenwandbereich (18) des Luftkammergehäuses (16) begrenzten offenen Anschlussbereich (20) umfasst, der dazu eingerichtet ist, die Zufuhr von aus einer Luftauslassöffnung (14) des Luftzufuhrrohrs (12) austretender Klimatisationsluft in das Luftkammergehäuse (16) zu ermöglichen.

3. Belüftungssystem nach Anspruch 1 oder 2,
**dadurch gekennzeichnet, dass** das Luftkammergehäuse (16) ein Dichtelement (24) umfasst, das sich entlang eines dem Luftzufuhrrohr (12) zugewandten Rands (22) des Seitenwandbereichs (18) des Luftkammergehäuses (16) erstreckt.

4. Belüftungssystem nach einem der Ansprüche 1 bis 3,
**dadurch gekennzeichnet, dass** das Luftzufuhrrohr (12) eine sich entlang seiner Längsachse (L) erstreckende Führungseinrichtung (26) umfasst, die dazu eingerichtet ist, eine geführte Verschiebung des Luftkammergehäuses (16) entlang der Längsache (L) des Luftzufuhrrohrs (12) zu ermöglichen.

5. Belüftungssystem nach einem der Ansprüche 1 bis 4,
**gekennzeichnet durch** eine Verriegelungsvorrichtung (28) zur Verriegelung des Luftkammergehäuses (16) in einer gewünschten Position entlang der Längsache (L) des Luftzufuhrrohrs (12).

6. Belüftungssystem nach Anspruch 5,
**dadurch gekennzeichnet, dass** die Verriegelungsvorrichtung (28) ein Verriegelungselement (30) umfasst, das zwischen einer Entriegelungsstellung und einer Verriegelungsstellung bewegbar mit dem Luftkammergehäuse (16) verbunden ist und in seiner Verriegelungsstellung mit einer an dem Luftzufuhrrohr (12) vorgesehenen Aufnahmevorrichtung (32) in Eingriff bringbar ist.

7. Belüftungssystem nach Anspruch 6,
**dadurch gekennzeichnet, dass** die an dem Luftzufuhrrohr (12) vorgesehenen Aufnahmevorrichtung (32) mindestens eine Aufnahmenut (32a, 32b) umfasst, die an der sich entlang der Längsachse (L) des Luftzufuhrrohrs (12) erstreckenden Führungseinrichtung (26) ausgebildet ist.

8. Belüftungssystem nach Anspruch 6 oder 7,
**dadurch gekennzeichnet, dass** das Verriegelungselement (30) dazu eingerichtet ist, in seiner Verriegelungsstellung eine Kraft auf das Luftkammergehäuse (16) aufzubringen, die das Luftkammergehäuse (16) gegen das Luftzufuhrrohr (12) drückt.

9. Belüftungssystem nach einem der Ansprüche 6 bis 8,
**dadurch gekennzeichnet, dass** das Verriegelungselement (30) in seiner Verriegelungsstellung das Luftkammergehäuse (16) zumindest abschnittsweise umspannt.

10. Belüftungssystem nach einem der Ansprüche 1 bis 9,
**dadurch gekennzeichnet, dass** nicht von einem Luftkammergehäuse (16) überdeckte Luftauslassöffnungen (14) des Luftzufuhrrohrs (12) mittels entsprechender Verschlussvorrichtungen (46) abdichtend verschlossen sind.

11. Belüftungssystem nach einem der Ansprüche 1 bis 10,
**dadurch gekennzeichnet, dass** die Verbindungseinrichtung (34) eine Mehrzahl von Verbindungsöffnungen (38, 40) zur Verbindung des Luftkammergehäuses (16) mit einer Luftzufuhrvorrichtung (36) zur Zufuhr von Klimatisationsluft in die Flugzeugpassagierkabine ausweist.

12. Belüftungssystem nach Anspruch 11,
**dadurch gekennzeichnet, dass** eine erste Verbindungsöffnung (38) der Verbindungseinrichtung (34) so angeordnet ist, dass sie im Wesentlichen senkrecht zur Längsachse (L) des Luftzufuhrrohrs (12) von Klimatisationsluft durchströmbar ist, und dass eine zweite Verbindungsöffnung (40) der Verbindungseinrichtung (34) so angeordnet ist, dass sie im Wesentlichen parallel zur Längsachse (L) des Luftzufuhrrohrs (12) von Klimatisationsluft durchströmbar ist.

13. Belüftungssystem nach Anspruch 12,
**dadurch gekennzeichnet, dass** eine nicht mit einer Luftzufuhrvorrichtung (36) zur Zufuhr von Klimatisationsluft in die Flugzeugpassagierkabine verbundene Verbindungsöffnung (38, 40) der Verbindungseinrichtung (34) mittels einer entsprechenden Verschlussvorrichtung (44) abdichtend verschlossen ist.

14. Belüftungssystem nach einem der Ansprüche 1 bis 13,
**dadurch gekennzeichnet, dass** die Verbindungseinrichtung (34) einen Verlängerungsadapter (42) umfasst, der insbesondere mit der zweiten Verbindungsöffnung (40) der Verbindungseinrichtung (34) verbunden ist.

15. Flugzeugklimaanlage,
**gekennzeichnet durch** ein Belüftungssystem (10) nach einem der Ansprüche 1 bis 14.
